# FASCICULE DE BREVET EUROPEEN

(11) **EP 1 278 343 B1**
(45) Date de publication et mention de la délivrance du brevet: **04.04.2007**
(21) Numéro de dépôt: 02291748.8
(22) Date de dépôt: 11.07.2002
(51) Int. Cl.: H04L 12/56, H04L 29/06

(54) **Réseau actif**
Aktives Netzwerk
Active network

(30) Priorité: 19.07.2001 FR 0109663
(43) Date de publication de la demande: 22.01.2003
(73) Titulaire: Alcatel Lucent, 75008 Paris (FR)
(72) Inventeur: Marce, Olivier, 91300 Massy (FR); Clevy, Laurent, 28000 Chartres (FR); Drago, Carlo, 75014 Paris (FR)
(74) Mandataire: Chaffraix, Sylvain

(56) Documents cités:
- KULKARNI A B ET AL: "Implementation of a prototype active network" OPEN ARCHITECTURES AND NETWORK PROGRAMMING, 1998 IEEE SAN FRANCISCO, CA, USA 3-4 APRIL 1998, NEW YORK, NY, USA,IEEE, US, 3 avril 1998 (1998-04-03), pages 130-142, XP010272580 ISBN: 0-7803-4783-8
- WETHERALL D J ET AL: "ANTS: a toolkit for building and dynamically deploying network protocols" OPEN ARCHITECTURES AND NETWORK PROGRAMMING, 1998 IEEE SAN FRANCISCO, CA, USA 3-4 APRIL 1998, NEW YORK, NY, USA,IEEE, US, 3 avril 1998 (1998-04-03), pages 117-129, XP010272584 ISBN: 0-7803-4783-8
- A. GALIS ET AL: "A flexible IP active networks architecture." ACTIVE NETWORKS, SECOND INTERNATIONAL WORKING CONFERENCE, 18 octobre 2000 (2000-10-18), pages 1-15, XP001066349 Tokyo, JP
- R. CARDOE ET AL: "LARA: a prototype system for supporting high performance active networking." ACTIVE NETWORKS. FIRST INTERNATIONAL WORKING CONFERENCE, 2 juillet 1999 (1999-07-02), pages 117-131, XP008001843 Berlin, DE

## Description

La présente invention est relative aux réseaux de télécommunication dont les noeuds sont capables de traiter de façon spécifique, les messages d'information qu'ils reçoivent.

L'invention s'applique particulièrement aux réseaux actifs. Ce concept de réseau actif a été introduit par les travaux du DARPA en 1994 et a fait l'objet de plusieurs conférences internationales, par exemple IWAN 99 (*International Workshop on Active Networks*) ou IWAN 2000.

Par exemple, le document "Implementation of a Prototype Active Network" (A.B. Kulkarni et. al.) révèle tel réseau actif.

Un réseau actif est un réseau dans lequel les noeuds, ou certains d'entre eux, sont capables de traiter d'une façon spécifique, certains messages véhiculés par le réseau. Autrement dit, cela signifie que ces noeuds doivent être capables de dérouler un algorithme autre que ceux qu'ils connaissaient lors de leur conception.

Au sein d'un réseau actif, tous les noeuds ne sont pas obligatoirement pourvus de cette capacité de traitement : on distingue donc des noeuds actifs de noeuds non actifs (c'est-à-dire normaux).

De la même façon, tous les messages ne nécessitent pas forcément un traitement spécifique : on distingue donc les messages (ou paquets) actifs des messages non-actifs (ou normaux).

De façon connue en soi, un message actif peut contenir un identificateur d'une application active. A la réception d'un message actif, un routeur actif peut exécuter le code associé à cette application active.

Toutefois, un noeud actif possède des ressources de stockage limitées, tandis que le nombre d'applications actives n'est a *priori* pas limité.

Aussi, une solution de l'état de l'art consiste à fournir un serveur d'applications actives : A la réception d'un message actif, le noeud actif contacte alors le serveur d'applications actives afin de télécharger le code correspondant à l'application active identifiée par le message actif.

Toutefois, cette solution de l'état de l'art est insuffisante car elle suppose qu'il n'y ait qu'un seul code possible correspondant à une application active. Or le Demandeur a remarqué qu'une même application active pourrait donner lieu à différents codes en fonction de spécificités du noeud actif.

Par exemple, les différents noeuds actifs d'un réseau actif peuvent posséder des environnements d'exécutions différents. C'est typiquement le cas lorsque ceux-ci proviennent de fournisseurs différents ou/et lorsqu'ils mettent en oeuvre des systèmes d'exploitation différents (système d'exploitation spécifique au fournisseur, système d'exploitation de type Unix etc.)

Un autre exemple est la fonction du noeud actif. Un cas classique est la distinction entre les routeurs internes (*Core Router* selon la terminologie en langue anglaise consacrée) et les routeurs frontières (*Edge Router*).

Le but de la présente invention est de permettre de prendre en compte des spécificités du noeud actif lors de la détermination du code correspondant à une application active.

Pour ce faire, l'invention a pour premier objet un noeud comportant un moyen pour recevoir un message actif, ce message actif contenant un identificateur d'application active, un moyen pour transmettre l'identificateur d'application active vers un serveur d'applications actives et un moyen pour recevoir du serveur d'applications actives et exécuter un code associé. Ce noeud se caractérise en ce qu'il comporte en outre un moyen pour transmettre au serveur d'applications actives des informations relatives à son environnement.

L'invention a pour deuxième objet un serveur d'applications actives comportant un moyen pour recevoir un identificateur d'application active provenant d'un noeud actif, un moyen d'association pour déterminer un code associé dépendant de l'identificateur d'application active, et un moyen pour télécharger ce code associé vers le noeud actif. Ce serveur d'applications actives se caractérise en ce qu'il comporte en outre un moyen pour recevoir des informations relatives à l'environnement du noeud actif et en ce que le moyen d'association détermine le code associé en fonction de ces informations.

Enfin, l'invention a pour troisième objet un procédé de transmission d'un message actif par un noeud actif consistant à :
- Recevoir le message actif, le message actif contenant un identificateur d'application active,
- Transmettre un message de requête à un serveur d'applications actives (S), contenant cet identificateur d'application active,
- Déterminer, par le serveur d'applications actives, d'un code associé, en fonction de l'identificateur d'application active,
- Télécharger ce code associé vers le noeud actif,
- Exécution du code associé et transmission du message actif vers un noeud actif suivant.
Ce procédé se caractérise en ce que le message de requête contient de surcroît des informations relatives à l'environnement du noeud actif, et en ce que la détermination du code associé est faite en fonction de ces informations.

Selon une mise en oeuvre de l'invention, les informations relatives à l'environnement comprennent un identificateur de l'environnement d'exécution du noeud actif.

Selon une mise en oeuvre de l'invention, les informations relatives à l'environnement comprennent un identificateur de la caractéristique d'intériorité du noeud actif.

Selon une mise en oeuvre de l'invention, le message de requête est conforme au protocole HTTP.

L'invention et ses avantages apparaîtront de façon plus claire dans la description de mises en oeuvre qui va suivre, en liaison avec les figures jointes.
La figure 1 illustre une première mise en oeuvre de l'invention.
La figure 2 schématise le moyen d'association dans le cas de cette première mise en oeuvre.
La figure 3 représente une deuxième mise en oeuvre de l'invention.
La figure 4 schématise le moyen d'association dans le cas de cette deuxième mise en oeuvre.

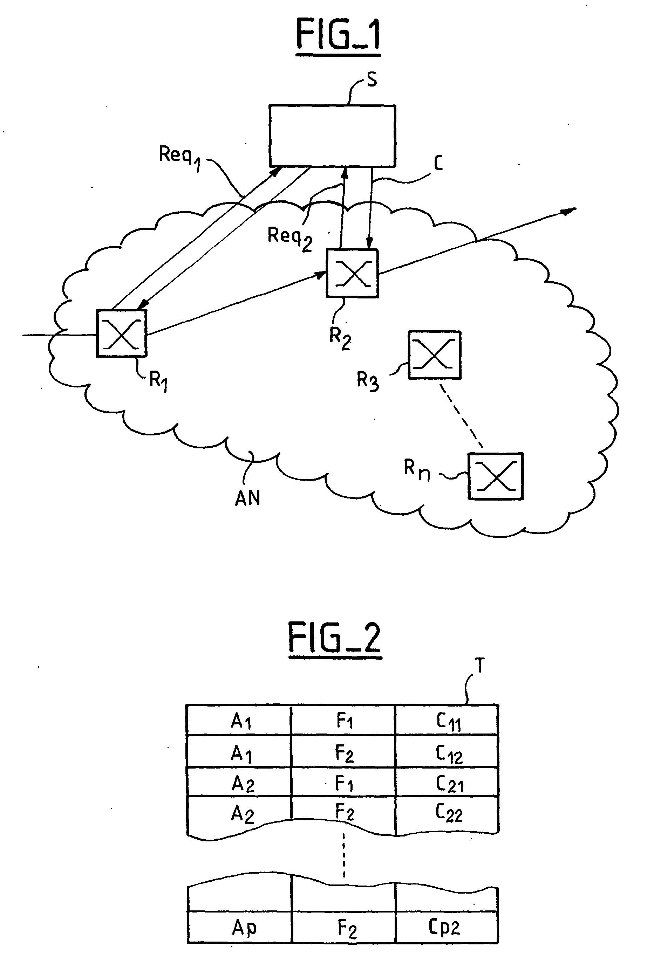

La figure 1 montre un réseau actif AN composé de noeuds actifs R₁, R₂, R₃... Rₙ.

Un message actif est reçu par ce réseau et transmis au sein des noeuds actifs de ce réseau. Ce message actif contient l'identificateur d'une application active.

A la réception du message actif, le noeud actif R₁ transmet à un serveur d'applications actives S un message de requête Req₁ contenant l'identificateur d'application active. Il transmet en outre des informations relatives à son environnement.

Selon cette mise en oeuvre, ces informations peuvent comprendre un identificateur de l'environnement d'exécution associé : système d'exploitation, modules supplémentaires disponibles, fournisseur du noeud actif...

Le serveur d'applications S possède un moyen pour recevoir ces deux types d'identificateurs ainsi qu'un moyen d'association entre des identificateurs d'applications actives, des informations relatives à l'environnement des noeuds actifs et un code associé.

Ce moyen d'association peut prendre la forme d'une table de correspondance ainsi qu'illustré par la figure 2.

Dans la table de correspondance T, la colonne de gauche représente les identificateurs d'application A₁, A₂, A₃... Aₚ.

La colonne du milieu contient des informations relatives aux noeuds actifs. Dans ce mode de réalisation, on n'a représenté que le fournisseur de noeud actif, pour la clarté de l'exposé. Deux fournisseurs F₁ et F₂ sont présentés.

La colonne de droite représente le code associé. Il peut par exemple s'agir d'un pointeur vers un espace mémoire contenant ce code.

Ainsi, si le message actif contient l'identificateur d'application A₂ et que le noeud actif R₁ provient du fournisseur F₁, alors le code associé est le code C₂₁.

Ce code associé C₂₁ est alors téléchargé vers le noeud actif R₁ où il peut être exécuté.

Le message actif peut alors être transmis au noeud R₂. On suppose que ce noeud actif provient du fournisseur F₂.

A la réception du message actif, le noeud actif transmet alors un message de requête Req₂ comprenant d'une part un identificateur de ce fournisseur F₂ et l'identificateur de l'application active A₂. Le serveur d'applications actives S peut alors déterminer, grâce au moyen d'association T représenté sur la figure 2, que le code a télécharger est le code C₂₂. Le noeud R₂ peut alors exécuter ce code C₂₂ qui lui est adapté.

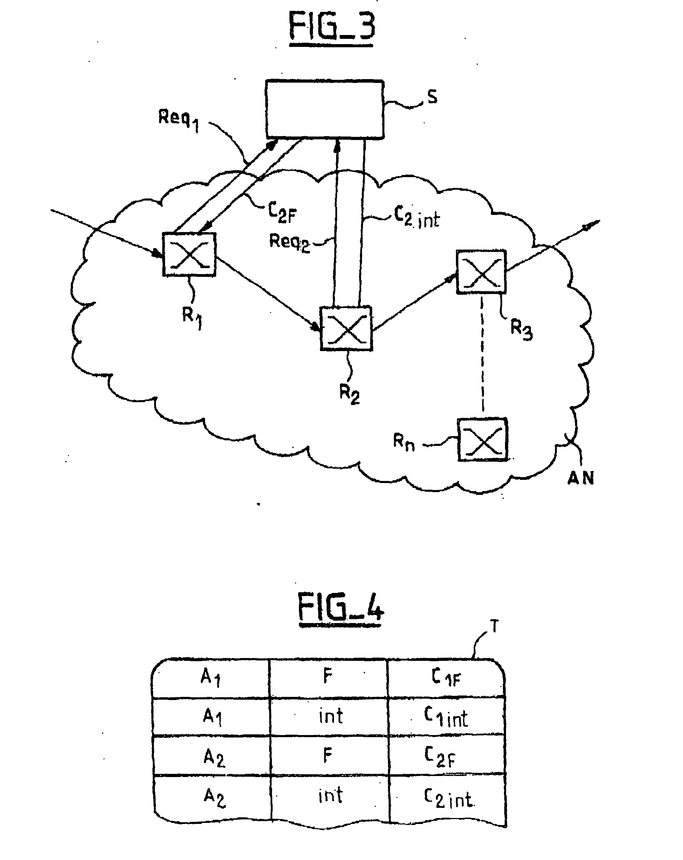

La figure 3 représente une deuxième mise en oeuvre de l'invention.

Le réseau actif AN est composé de noeuds actifs R₁, R₂, R₃... Rₙ. Les noeuds actifs R₁ et R₃ sont des noeuds frontières (*Edge routers*) tandis que les noeuds R₂ et Rₙ sont des noeuds internes (*Core Router*). Les noeuds frontières peuvent communiquer avec l'extérieur du réseau AN tandis que les noeuds internes ne communiquent qu'avec des noeuds du réseau actif.

Cette différence peut influer sur l'architecture de ces différents types de noeuds :
- Les noeuds internes sont plus spécifiquement dédiés au routage de messages et possèdent des capacités matérielles de routage accrues au détriment des capacités logicielles.
- Au contraire, les noeuds frontières possèdent des capacités logicielles plus importantes car ils doivent généralement mettre en oeuvre davantage de fonctions (contrôle d'accès etc.)

Lorsqu'un message actif est reçu par un routeur frontière, par exemple R₁, celui transmet d'une part l'identificateur d'application active qu'il contient et d'autre part des informations relatives à son environnement, c'est-à-dire, dans cette mise en oeuvre de l'invention un identificateur de la caractéristique d'intériorité du noeud actif concerné.

Ainsi, lorsque le noeud actif R₁ reçoit un message actif, il transmet à un serveur d'applications actives S, via un message de requête Req₁, d'une part un identificateur de l'application active contenu dans le message actif reçu, et d'autre part identificateur de la caractéristique d'intériorité du noeud actif concerné.

Le serveur d'applications actives S dispose de moyens pour recevoir ces deux types d'identificateurs, ainsi que d'un moyen d'association destiné à déterminer un code associé dépendant de ces deux identificateurs.

Une mise en oeuvre possible de ce moyen d'association est représentée sur la figure 4. Selon cette mise en oeuvre, le moyen d'association est une table de correspondance T.

La première colonne représente l'identificateur de l'application active ; Sa valeur est ici A₁ ou A₂.

La deuxième colonne représente la fonction noeud interne / noeud frontière ; Elle ne peut prendre que deux valeurs : F pour « Frontière » et Int pour « Interne ».

Enfin, la troisième colonne représente le code associé, C_{1F}, C_{1Int}, C_{2F} et C_{2Int}.

Si le message actif reçu par R₁ contient l'identificateur de l'application active A₂, le noeud actif R₁ transmet au serveur d'applications actives S un message de requête Req₁ contenant d'une part cet identificateur d'application active A₂ et d'autre part l'identificateur de sa caractéristique d'intériorité valant ici « F ».

Le serveur d'applications actives S, grâce au moyen d'association T, peut alors déterminer que le code associé est le code C_{2F}.

Ce code C_{2F} peut alors être téléchargé vers le noeud actif demandeur R₁ pour y être exécuté.

Le noeud actif R₁ peut alors transmettre le message actif au noeud actif R₂ qui est un noeud interne (i.e. qui ne possède pas de liens de communication avec des noeuds situés en dehors du réseau actif considéré).

Comme précédemment, à la réception du message actif, le noeud actif R₂ transmet un message de requête Req₂ au serveur d'applications actives S, contenant d'une part un identificateur d'application active A₂ et d'autre part un identificateur de sa caractéristique d'intériorité qui, dans son cas, vaut « Int ».

Comme précédemment, le serveur d'applications actives S peut, grâce à son moyen d'association T, déterminer que le code associé est le code C_{2Int}.

Le code C_{2Int} est alors téléchargé vers le noeud actif demandeur R₂. Ce noeud actif R₂ peut alors l'exécuter et transmettre le message actif au noeud suivant, par exemple au noeud actif R₃.

L'invention ne saurait se limiter aux modes de réalisation précédemment décrits mais peut s'appliquer à toute sorte d'informations relatives à l'environnement des noeuds actifs.

Notamment, l'invention s'applique à la combinaison de plusieurs types d'informations relatives à l'environnement des noeuds actifs.

Par exemple, les noeuds actifs peuvent transmettre à la fois un identificateur du fournisseur et un identificateur de la caractéristique d'intériorité du noeud actif concerné.

Selon un mode de réalisation particulier, la communication entre les noeuds actifs et le serveur d'applications actives, c'est-à-dire les messages de requêtes Req₁ et Req₂, se fait conformément au protocole HTTP (*HyperText Transfer Protocol*). Dans ce mode de réalisation, les informations sur l'environnement du noeud actif sont transmises au serveur d'applications actives selon l'une des méthodes conformes au protocole HTTP, et le code actif correspondant est retourné de manière conforme à ce même protocole HTTP.

La présente invention ne saurait toutefois se limiter à ce mode de réalisation et est susceptible d'être mise en oeuvre en utilisant n'importe quel autre protocole de communication et d'échange de données. Ce peut être un protocole applicatif comme FTP (*File Transfer Protocol*) ou non (communication par sockets...). Il peut aussi s'agir d'un protocole sécurisé tel SSL (*Secure Socket Layer).*

## Revendications

1. Noeud actif (R₁, R₂... Rₙ) comportant un moyen pour recevoir un message actif, ledit message actif contenant un identificateur d'application active (A₁, A₂), un moyen pour transmettre ledit identificateur d'application active vers un serveur d'applications actives (S) et un moyen pour recevoir dudit serveur d'applications actives et exécuter un code associé (C₁₁, C₁₂, C₂₁...), **caractérisé en ce qu**'il comporte en outre un moyen pour transmettre audit serveur d'applications actives des informations relatives à son environnement (F₁, F₂, Int, F).

2. Noeud actif selon la revendication précédente, dans lequel lesdites informations relatives à l'environnement comprennent un identificateur de l'environnement d'exécution (F₁, F₂) dudit noeud actif.

3. Noeud actif selon l'une des revendications 1 ou 2, dans lequel lesdites informations relatives à l'environnement comprennent un identificateur de la caractéristique d'intériorité (F, Int) dudit noeud actif.

4. Serveur d'applications actives (S) comportant un moyen pour recevoir un identificateur d'application active (A₁, A₂) provenant d'un noeud actif (R₁, R₂... Rₙ), un moyen d'association (T) pour déterminer un code associé (C₁₁, C₁₂...) dépendant dudit identificateur d'application active, et un moyen pour télécharger ledit code associé vers ledit noeud actif, **caractérisé en ce qu**'il comporte en outre un moyen pour recevoir des informations relatives à l'environnement (F₁, F₂, Int, F) dudit noeud actif et en ce que ledit moyen d'association est adapté à déterminer ledit code associé en fonction desdites informations.

5. Serveur d'applications actives selon la revendication précédente, dans lequel lesdites informations relatives à l'environnement comprennent un identificateur de l'environnement d'exécution dudit noeud actif.

6. Serveur d'applications actives selon l'une des revendications 4 ou 5, dans lequel lesdites informations relatives à l'environnement comprennent un identificateur de la caractéristique d'intériorité dudit noeud actif.

7. Procédé de transmission d'un message actif par un noeud actif (R₁, R₂... Rₙ) consistant à :
• Recevoir ledit message actif, ledit message actif contenant un identificateur d'application active (A₁, A₂),
• Transmettre un message de requête (Req₁, Req₂) à un serveur d'applications actives (S), contenant ledit identificateur d'application active,
• Déterminer, par ledit serveur d'applications actives, d'un code associé (C₁₁, C₁₂, C₁₁ₙₜ...), en fonction dudit identificateur d'application active,
• Télécharger ledit code associé vers ledit noeud actif,
• Exécution dudit code associé et transmission du message actif vers un noeud actif suivant,
**caractérisé en ce que** ledit message de requête contient de surcroît des informations relatives à l'environnement (F₁, F₂, Int, F) dudit noeud actif, et **en ce que** la détermination du code associé est faite en fonction desdites informations.

8. Procédé selon la revendication précédente, dans lequel lesdites informations relatives à l'environnement comprennent un identificateur de l'environnement d'exécution dudit noeud actif.

9. Procédé selon l'une des revendications 7 ou 8, dans lequel lesdites informations relatives à l'environnement comprennent un identificateur de la caractéristique d'intériorité dudit noeud actif.

10. Procédé selon l'une des revendications 7 à 9, dans lequel ledit message de requête est conforme au protocole HTTP.

## Claims

1. An active node (R₁, R₂, ..., Rₙ) including means for receiving an active message, said active message containing an active application identifier (A₁, A₂, ...), means for transmitting said active application identifier to an active applications server (S), and means for receiving associated code (C₁₁, C₁₂, C₂₁, ...) from said active applications server and for executing it, the node being **characterized in that** it further comprises means for transmitting to said active applications server information relating to its own environment (F₁, F₂, core, edge).

2. An active node according to the preceding claim, in which said information relating to the environment comprise an identifier of the execution environment (F₁, F₂) of said active node.

3. An active node according to claim 1 or claim 2, in which said information relating to the environment comprises an identifier of a core/edge characteristic (core, edge) of said active node.

4. An active applications server (S) including means for receiving an active application identifier (A₁, A₂, ...) from an active node (R₁, R₂, ..., Rₙ), association means (T) for determining an associated code (C₁₁, C₁₂, ...) depending on said active application identifier, and means for downloading said associated code to said active node, the server being **characterized in that** it further comprises means for receiving information relating to the environment (F₁, F₂, core, edge) of said active node and **in that** said association means is adapted to determine said associated code as a function of said information.

5. An active applications server according to the preceding claim, in which said information relating to the environment comprises an identifier of the execution environment of said active node.

6. An active applications server according to claim 4 or claim 5, in which said information relating to the environment comprises an identifier of the core/edge characteristic of said active node.

7. A method of forwarding an active message via an active node (R₁, R₂, ..., Rₙ), the method consisting in:
· receiving said active message, said active message containing at active application identifier (A₁, A₂, ...);
· sending a request message (Req₁, Req₂) to an active applications server (S), the message containing said active application identifier;
.in said active applications server, determining an associated code (C₁₁, C₁₂, C_{1core}, ...) as a function of said active application identifier;
· downloading said associated code to said active node; and
· executing said associated code and forwarding the active message to a following active node;
the method being **characterized in that** said request message further contains information relating to the environment (F₁, F₂, core, edge) of said active node, and **in that** the associated code is determined as a function of said information.

8. A method according to the preceding claim, in which said information relating to the environment comprises an identifier of the execution environment of said active node.

9. A method according to claim 7 or claim 8, in which said information relating to the environment comprises an identifier of the core/edge characteristic of said active node.

10. A method according to any one of claims 7 to 9, in which said request message complies with the HTTP protocol.

## Patentansprüche

1. Aktiver Knoten (R₁, R₂... Rₙ), der eine Vorrichtung zum Empfang einer aktiven Meldung umfasst, wobei die genannte aktive Meldung eine Kennung für eine aktive Anwendung (A₁, A₂), eine Vorrichtung zur Übertragung der genannten Kennung für die aktive Anwendung an einen Server für aktive Anwendungen (S) und eine Vorrichtung zum Empfang von dem genannten Server für aktive Anwendungen und zur Ausführung eines zugeordneten Codes (C₁₁, C₁₂, C₂₁...) umfasst, **dadurch gekennzeichnet, dass** er außerdem eine Vorrichtung zur Übertragung von Informationen in Bezug auf seine Umgebung (F₁, F₂, Int, F) an den genannten Server für aktive Anwendungen umfasst.

2. Aktiver Knoten gemäß dem vorgenannten Anspruch, bei dem die genannten Informationen in Bezug auf die Umgebung eine Kennung für die Ausführungsumgebung (F₁, F₂) des genannten aktiven Knotens umfassen.

3. Aktiver Knoten gemäß einem der Ansprüche 1 oder 2, bei dem die genannten Informationen in Bezug auf die Umgebung eine Kennung für das Internheitsmerkmal (F, Int) des genannten aktiven Knoten umfassen.

4. Server für aktive Anwendungen (S), der eine Vorrichtung zum Empfang einer Kennung für die aktive Anwendung (A₁, A₂), die von einem aktiven Knoten (R₁, R₂... Rₙ) stammt, eine Verknüpfungsvorrichtung (T) zur Ermittlung eines zugeordneten Codes (C₁₁, C₁₂...), die von der genannten Kennung für die aktive Anwendung abhängig ist, und eine Vorrichtung zum Herunterladen des genannten zugeordneten Codes an den genannten aktiven Knoten umfasst, **dadurch gekennzeichnet, dass** er außerdem eine Vorrichtung zum Empfang von Informationen in Bezug auf die Umgebung (F₁, F₂, Int, F) des genannten aktiven Knotens umfasst, sowie **dadurch** dass die genannte Verknüpfungsvorrichtung in der Lage ist, den genannten zugeordneten Code in Abhängigkeit von den genannten Informationen zu ermitteln.

5. Server für aktive Anwendungen gemäß dem vorgenannten Anspruch, bei dem die genannten Informationen in Bezug auf die Umgebung eine Kennung für die Ausführungsumgebung des genannten aktiven Knotens umfassen.

6. Server für aktive Anwendungen gemäß einem der vorgenannten Ansprüche 4 oder 5, bei dem die genannten Informationen in Bezug auf die Umgebung eine Kennung für das Internheitsmerkmal des genannten aktiven Knotens umfassen.

7. Verfahren zur Übertragung einer aktiven Meldung durch einen aktiven Knoten (R₁, R₂ ... Rₙ), das Folgendes umfasst:
• Empfang der genannten aktiven Meldung, wobei die genannte aktive Meldung eine Kennung für die aktive Anwendung (A₁, A₂) umfasst;
• Übertragung einer Anfragemeldung (Req₁, Req₂) an einen Server für aktive Anwendungen (S), die die genannte Kennung für die aktive Anwendung umfasst;
• Ermittlung eines zugeordneten Codes (C₁₁, C₁₂, C_{1Int}...) in Abhängigkeit von der genannten Kennung für die aktive Anwendung durch den genannten Server für aktive Anwendungen;
• Herunterladen des genannten zugeordneten Codes an den genannten aktiven Knoten;
• Ausführung des genannten zugeordneten Codes und Übertragung einer aktiven Meldung an den folgenden aktiven Knoten;
**dadurch gekennzeichnet, dass** die genannte Anfragemeldung außerdem Informationen in Bezug auf die Umgebung (F₁, F₂, Int, F) des genannten aktiven Knotens umfasst, sowie **dadurch**, dass die Ermittlung des zugeordneten Knotens in Abhängigkeit von den genannten Informationen erfolgt.

8. Verfahren gemäß dem vorgenannten Anspruch, bei dem die genannten Informationen in Bezug auf die Umgebung eine Kennung für die Ausführungsumgebung des genannten aktiven Knotens umfassen.

9. Verfahren gemäß einem der Ansprüche 7 oder 8, bei dem die genannten Informationen in Bezug auf die Umgebung eine Kennung für das Internheitsmerkmal des genannten aktiven Knotens umfassen.

10. Verfahren gemäß einem der Ansprüche 7 bis 9, bei dem die genannte Anfragemeldung dem HTTP-Protokoll entspricht.
